# FASCICULE DE BREVET EUROPEEN

(11) **EP 2 895 902 B1**
(45) Date de publication et mention de la délivrance du brevet: **30.09.2020**
(21) Numéro de dépôt: 13785611.8
(22) Date de dépôt: 23.08.2013
(51) Int. Cl.: G02B 6/38

(54) **PORTE DOUILLE D'ALIGNEMENT MONOBLOC AVEC VERROUILLAGE**
EINTEILIGER AUSRICHTUNGSFASSUNGSHALTER MIT VERRIEGELUNGSVORRICHTUNG
ONE-PIECE ALIGNMENT SOCKET HOLDER WITH LOCKING MEANS

(30) Priorité: 12.09.2012 CH 16582012
(43) Date de publication de la demande: 22.07.2015
(73) Titulaire: Fischer Connectors Holding S.A., 1162 St-Prex (CH)
(72) Inventeur: MIEVILLE, Jacques, CH-1054 Morrens (CH); TESTAZ, Olivier, CH-1052 Le Mont-sur-Lausanne (CH)
(74) Mandataire: Grosfillier, Philippe
(86) Numéro de dépôt international: PCT/IB2013/056831
(87) Numéro de publication internationale: WO 2014/041449

(56) Documents cités:
- EP-A2- 0 462 362
- US-A1- 2004 223 720
- US-B1- 6 357 929

## Description

### DOMAINE TECHNIQUE ET ART ANTERIEUR

La présente invention concerne le domaine des connecteurs, notamment des connecteurs optiques.

Plus précisément, la présente invention concerne les douilles d'alignement utilisées dans les contacts de tels connecteurs.

Un exemple typique d'un tel contact/connecteur est donné dans le brevet US 6,357,929.

D'autres exemples de tels contacts/connecteurs sont commercialisés par les sociétés Glenair® ou Souriau® et sont décrits dans les pages internet aux adresses suivantes
http://www.glenair.com/contacts/pdf/fiber optic 181 043.pdf
http://www.glenair.com/contacts/pdf/fiber optic 181 050.pdf
http://www.glenair.com/contacts/qpl_and_commercial_high_performance_fiber_ optic_termini.htm
http://www.souriau.com/fileadmin/Souriau/product_pdf/ELIO-Fiber-Optic-Contact.pdf

Un élément qui est utilisé couramment dans de tels contacts est formé par des douilles d'alignement qui permettent l'alignement précis des ferrules lorsque le connecteur est connecté. Un tel alignement précis est en effet nécessaire pour assurer une bonne transmission de l'information, par exemple optique dans le cas de connecteurs à fibre optique.

Outre des systèmes de montage de douilles individuelles, actuellement il existe dans le domaine de la connectique fibre optique des systèmes de fixation des douilles d'alignement qui sont soit solidaires d'un des blocs de contacts soit à visser fixer sur les férules de façon individuelle.

Seul Hirose offre sur sa série de connecteurs HE2 la possibilité d'enlever la protection qui maintient les douilles d'alignement de façon monobloc (à l'aide d'une vis).

Toutefois, dans ce système les douilles d'alignement restent sur les ferrules une fois la protection enlevée. En effet pour avoir accès auxdites ferrules (du connecteur Hirose) il faut dans une deuxième opération et à l'aide d'un outil spécifique retirer une par une les douilles.

Une telle opération n'est pas avantageuse, notamment si le nombre de douilles est important et/ou si leur taille est faible. De plus, un tel démontage doit pouvoir se faire facilement pour nettoyer voire échanger lesdites douilles.

Un connecteur de la société Glenair® commercialisé sous le nom "Glenair Next Generation (NGCON) Fiber Optic Connection System" comprend apparemment un porte-douille qui est attaché au connecteur par une vis.

### SOMMAIRE DE L'INVENTION

Un but de l'invention est par conséquent d'améliorer les contacts et les connecteurs connus.

Plus précisément, un but de l'invention est de proposer un contact, par exemple un contact pour connecteur optique, possédant des moyens simples et efficaces pour permettre le démontage des douilles d'alignement et l'accès aux ferrules, par exemple pour leur nettoyage.

La volonté de donner un accès facilité aux ferrules des deux composants (fiche et embase) a débouché dans un mode d'exécution de l'invention sur un porte-douille d'alignement monobloc facilement démontable en une seule opération sans utiliser de pièce additionnelle comme proposé dans le produit Glenair® décrit ci-dessus. Toutes les douilles sont ainsi retirées en même temps mais elles restent alignées ce qui facilite leur (re)montage en une seule opération également.

Le porte-douille selon l'invention étant simple et bon marché, il peut être échangé en cas de besoin.

L'une des idées de la présente invention est de concevoir des pièces permettant la constitution d'un bloc encapsulant les douilles d'alignement, ce bloc peut être monté dans un connecteur ou retiré grâce à un système de verrouillage intégré audit bloc.

Ce verrouillage permet une insertion et un retrait très aisé des douilles d'alignement. Le système de support de douilles est défini par la revendication 1.

Dans un mode d'exécution préféré un système de verrouillage de type push-pull est intégré au porte-douille d'alignement selon l'invention pour éviter qu'il ne puisse s'enlever de façon non-contrôlée, par exemple lors d'une déconnection. Dans un mode d'exécution, le système comprend un assemblage de trois pièces permettant, d'une part, de fixer plusieurs douilles d'alignement de façon prédéterminée, et d'autre part, une extraction et insertion simultanées par exemple dans un connecteur de toutes les douilles d'alignement sans démontage dudit assemblage.

Dans un mode, l'assemblage est de type push-pull permettant un montage et un démontage d'une douille d'alignement permettant de garantir la position de ladite douille lors de l'enfichage et désenfichage du connecteur complet.

De préférence, le nombre de douille d'alignement de ferrules est supérieur à un.

Dans un mode d'exécution, l'assemblage est de type à clipper.

Dans un autre mode d'exécution, ne faisant pas partie de l'invention revendiquée, l'assemblage est de type baïonnette.

### BREVE DESCRIPTION DES DESSINS

L'invention sera mieux comprise par la description de plusieurs modes d'exécution et des figures qui s'y rapportent dans lesquelles
La figure 1 illustre une vue en perspective en éclaté d'un mode d'exécution du porte-douille selon l'invention;
La figure 2 illustre une vue en coupe axiale d'un mode d'exécution du porte-douille selon l'invention dans une première position;
La figure 3 illustre une vue en coupe axiale d'un mode d'exécution du porte-douille selon l'invention dans une deuxième position;
Les figures 4A à 4F illustrent des vues d'un autre mode d'exécution du porte-douille
Les figures 5A à 5F illustrent des vues d'un autre mode d'exécution du porte-douille
Les figures 6A à 6E illustrent des vues d'un autre mode d'exécution du porte-douille selon l'invention.
Les figures 7A à 7E illustrent des vues d'un autre mode d'exécution du porte-douille selon l'invention.
La figure 8 illustre schématiquement un porte-douille monté dans un connecteur.

### DESCRIPTION DETAILLEE

L'invention est décrite maintenant en référence aux figures qui illustrent plusieurs modes d'exécution de la présente invention.

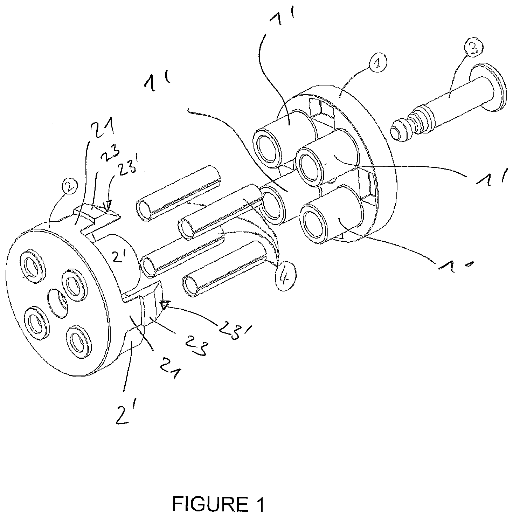

Un premier mode d'exécution de l'invention illustré à la figure 1 comprend une première pièce 1 formant un porte-douille mâle, une deuxième pièce 2 formant un porte-douille femelle, une troisième pièce 3 formant un clou de verrouillage et des douilles d'alignement 4 (typiquement provenant du commerce) qui s'emboîtent dans les pièces 1 et 2, par exemple dans des portées ou cages 1', 2'.

Dans ce mode d'exécution, quatre douilles sont illustrées mais on peut envisager des variantes avec moins de quatre douilles ou plus de quatre douilles, en utilisant le principe de la présente invention.

Une fois ces pièces 1 - 4 assemblées on obtient un sous ensemble appelé porte douille d'alignement monobloc & push pull selon la présente invention.

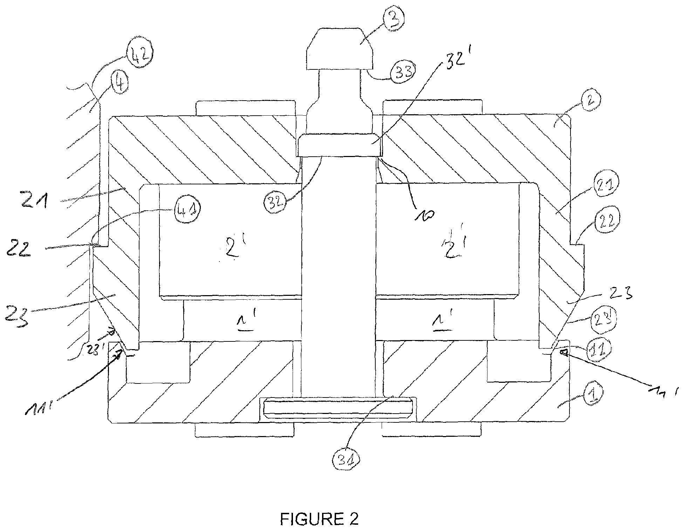

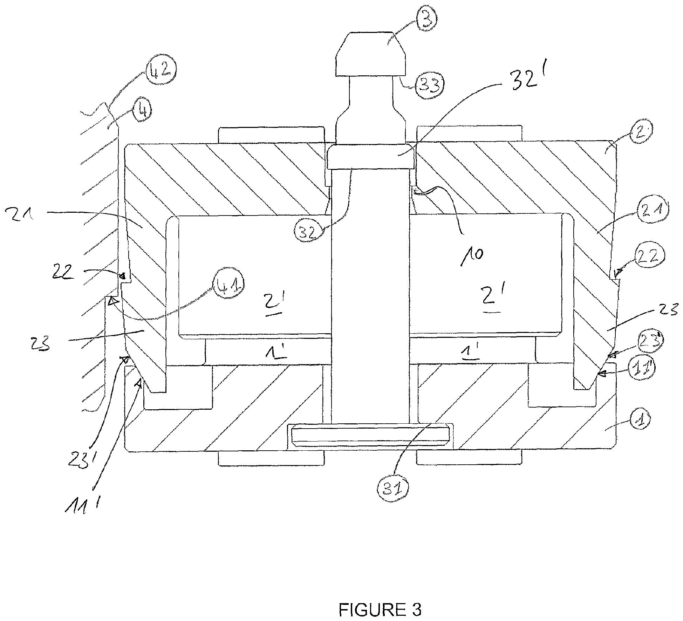

Pour que le système de porte-douille une fois assemblé ne se démonte pas, le clou 3 comprend une collerette 32' avec un épaulement 32 qui empêche la partie femelle 2 de se démonter, par exemple par une corniche correspondante 10 qui se trouve dans le trou de passage du clou 3 (voir les figures 2 et 3).

On se réfère maintenant aux figures 2 et 3 qui illustrent le dispositif de la figure 1 à l'état monté, dans deux positions différentes.

Selon l'invention, une fonction "push pull" de verrouillage est assurée par des languettes élastiques 21 qui en position nominale non contraintes forment un épaulement 22 permettant l'accroche contre une géométrie 41 (par exemple un épaulement correspondant) réalisé sur la contre pièce 4 (par exemple appartenant au contact ou au connecteur dans lequel le système est monté).

Le fonctionnement de ces modes push-pull est décrit plus en détail ci-dessous.

### Fonction Push

Pour verrouiller le system (Push) il faut exercer une pression sur la deuxième pièce 2 afin de permettre son insertion dans la géométrie grâce à la flexion des lamelles 21 dont le déplacement est induit par le congé 23 du bout de la lamelle 21 frottant contre la zone d'entrée 42 de la géométrie 4. Une fois arrimé en position le système se verrouille grâce à l'action des lamelles 21 qui se relèvent dans la géométrie 4 au niveau de l'épaulement 41. Le maintien en position est garanti par le fait qu'aucun angle autorisant une flexion des lamelles 21 n'est possible entre l'épaulement de la géométrie 41 et l'épaulement 22 du porte-douille d'alignement femelle 2.

Cette position est illustrée à la figure 2 où le porte-douille est bloqué dans la zone d'entrée 42, qui appartient par exemple à un connecteur.

Pour que le système de porte-douille une fois assemblé ne se démonte pas, le clou 3 comprend une collerette 32' avec un épaulement 32 qui empêche la partie femelle 2 de se démonter, par exemple par une corniche correspondante 10 qui se trouve dans le trou de passage du clou 3.

### Fonction Pull

Pour déverrouiller de système (Pull), il est nécessaire de déplacer les lamelles 21 en direction du clou 3 afin de supprimer l'accrochage de leur épaulement 22 contre la géométrie 41. A cet effet, on prévoit d'exercer une action de traction mécanique sur le clou de verrouillage 3 comme moyen d'actionnement. La force générée par cette action de traction est transmise au porte douille mâle 1 qui se déplace axialement contre le porte-douille femelle 2 sous l'action de ladite force de traction.

Pour faciliter l'application de cette force de traction, le clou 3 peut posséder une tête en forme de "champignon" avec un épaulement 33 qui permet sa saisie, par exemple au moyen d'un outil comme une pince.

Lors de ce déplacement, les congés 11 de la pièce mâle 1 viennent en contact avec les extrémités des lamelles 23 et exercent une contrainte sur lesdites lamelles en direction de l'intérieur du porte-douille d'alignement monobloc, c'est-à-dire en direction du clou 3 par le plan incliné 11' du congé 11 qui coopère avec le plan incliné 23' de l'extrémité 23 de la lamelle 21.

Cette contrainte permet de créer un déplacement des lamelles 23 dans la direction de ladite contrainte c'est-à-dire en direction du clou 3 permettant ainsi à l'épaulement 22 de passer en-dessous de la géométrie 41 qui le retient par le resserrement ainsi induit des lamelles 21, autorisant ainsi l'extraction du porte-douille d'alignement monobloc en seule opération de traction sur le clou.

On obtient ainsi un système très facile à manipuler et le démontage, respectivement le remontage, de toutes les douilles s'effectue très rapidement et très simplement.

De préférence, les pièces 1 et 2 sont réalisées en matières synthétiques (plastique etc).

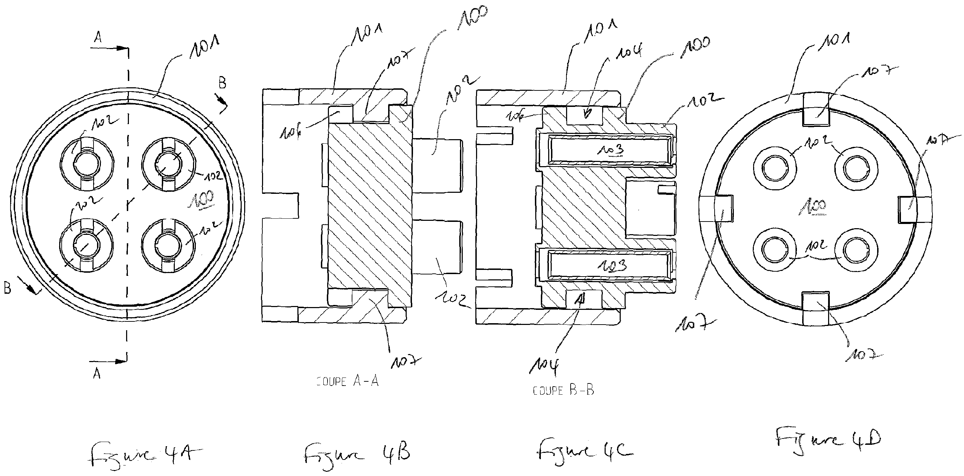

Les figures 4A à 4F illustrent un mode d'exécution ne faisant pas partie de l'invention, dans lequel le système de fixation push-pull est remplacé par un système à baïonnette.

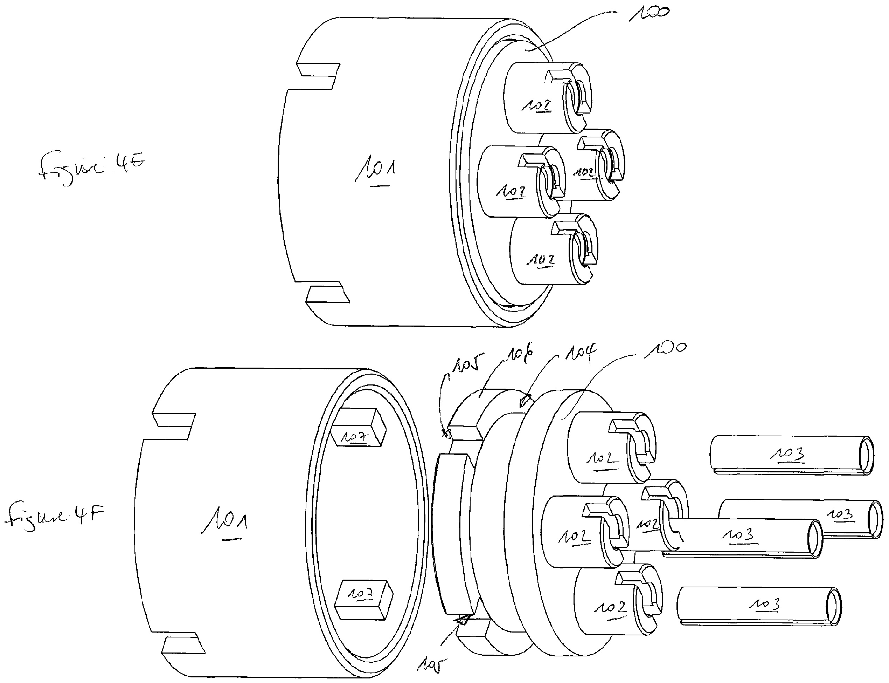

La figure 4A plus précisément est une vue arrière du support 100, la figure 4B une vue en coupe selon l'axe A-A, la figure 4C une vue en coupe selon l'axe B-B, la figure 4D une vue de face du support 100, la figure 4E une vue en perspective du support 100 à l'état monté et la figure 4F une vue en perspective "éclatée" du support 100.

Plus précisément, le support 100 est monté dans une bague 101 qui fait partie du connecteur (non-représenté) et attaché par des moyens qui seront décrits plus bas. Le support 100 comprend notamment des cages 102 dans lesquelles les douilles 103 sont situées. Lesdites douilles 103 peuvent par exemple être forcées dans les cages 102 ou alors le support 100 peut être en deux parties à l'instar du premier mode d'exécution pour permettre le montage des douilles 103 dans les cages 102.

Afin de permettre le fixation du support 100 dans la bague 101, on a prévu un système à baïonnette formé comme suit. Le support comprend une rainure 104 (partie avec un diamètre réduit) et des passages 105 sur le diamètre arrière 106 du support 100. Ces passages 105 sont destinés à coopérer avec des éléments saillants 107 qui se trouvent dans la bague 101 lors du montage pour permettre un verrouillage du support 100 dans la bague par un effet type baïonnette: une fois le support 100 monté, il subit une rotation est les éléments 107 se retrouvent alors bloqués dans la rainure 104 ce qui a pour effet de lier les pièces 100 et 101 par une simple rotation. On peut par exemple prévoir un système de butée (non-représenté) pour limiter la rotation relative du support 100 et de la bague 101.

Une fois le support 100 monté dans la bague et tourné relativement à celle-ci de par exemple 45°, on ne peut plus extraire axialement le support 100 de la bague 101 et le blocage axial est ainsi assuré.

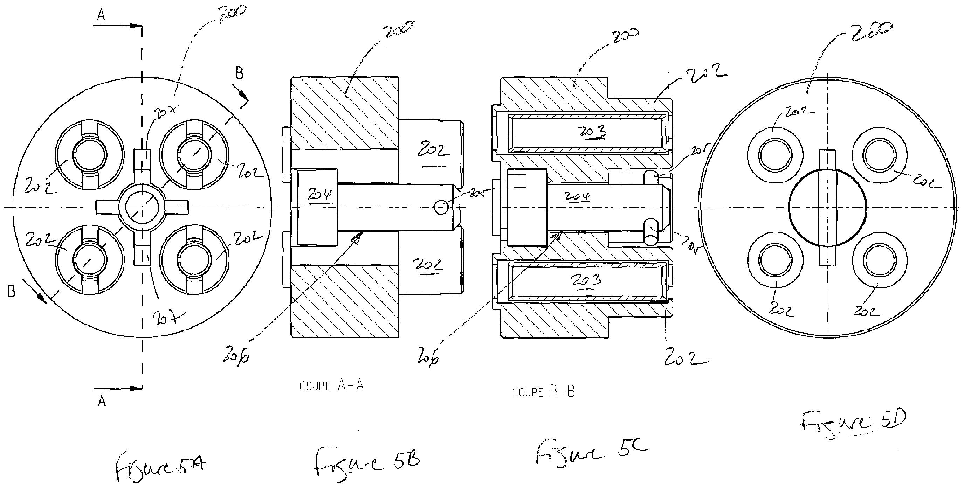

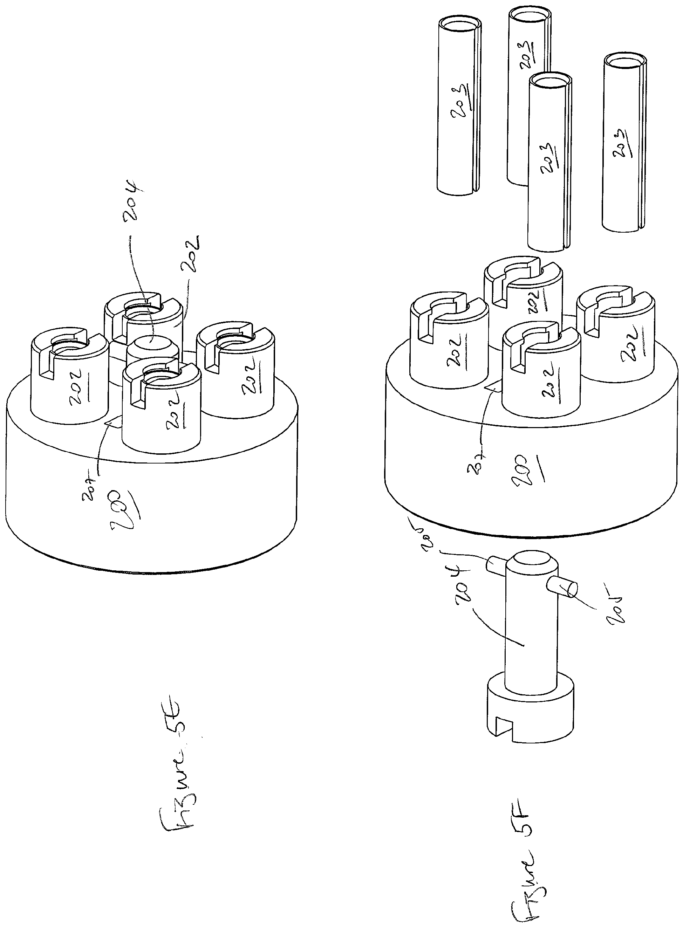

Les figures 5A à 5F illustrent un autre système de verrouillage type baïonnette utilisant un clou central avec des portées. Plus précisément, la figure 5A est une vue arrière du support 200, la figure 5B une vue en coupe selon l'axe A-A, la figure 5C une vue en coupe selon l'axe B-B, la figure 5D une vue de face du support 200, la figure 5E une vue en perspective du support 200 à l'état monté et la figure 5F une vue en perspective "éclatée" du support 200.

Le support 200 comprend notamment des cages 202 dans lesquelles les douilles 203 sont situées. Lesdites douilles 203 peuvent par exemple être forcées dans les cages 202 ou alors le support 200 peut être en deux parties à l'instar du premier mode d'exécution pour permettre le montage des douilles 203 dans les cages 202.

Comme moyen de verrouillage de type baïonnette, on utilise dans ce mode un clou 204 ayant des portées 205 s'étendant perpendiculairement à l'axe du clou (voir figure 5F notamment). Un fois le support 200 monté, le clou est introduit dans un trou axial 206 du support 200, ce trou possédant des rainures 207 correspondant aux portées 205 pour permettre cette introduction et ensuite le clou 204 et ses portées 205 sont utilisés pour verrouiller le montage du support 200 dans le connecteur (non-illustré) par des moyens idoines correspondant, par exemple des rainures transversales recevant les portées 205.

De préférence, dans les modes d'exécution à baïonnette, on ajoute des moyens élastiques de type ressort par exemple (non représentés), qui permettent de s'assurer de la tenue aux vibrations du connecteur et de la "non démontabilité" intempestive du système en cours d'utilisation. Tout moyen équivalent permettant d'assurer ce résultat peut être mis en œuvre.

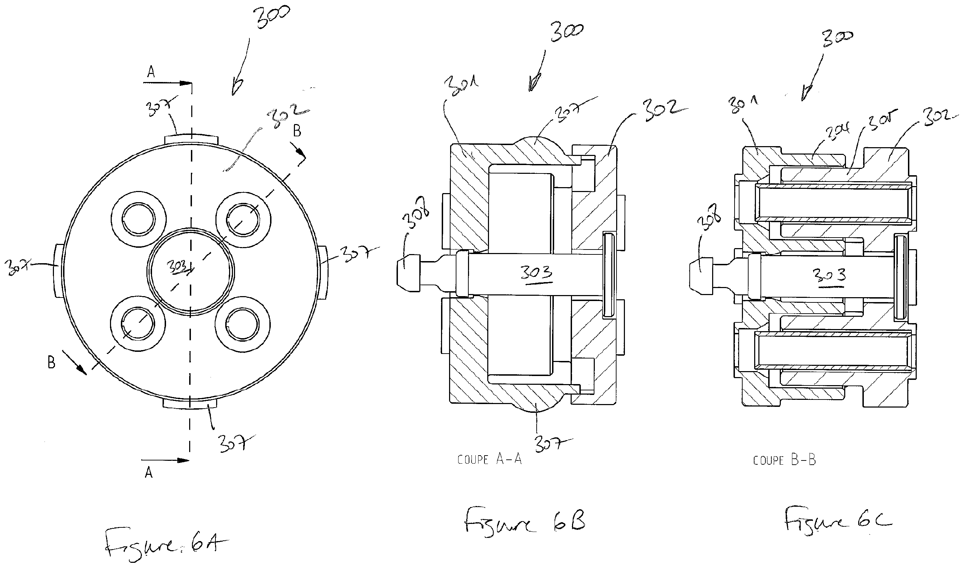

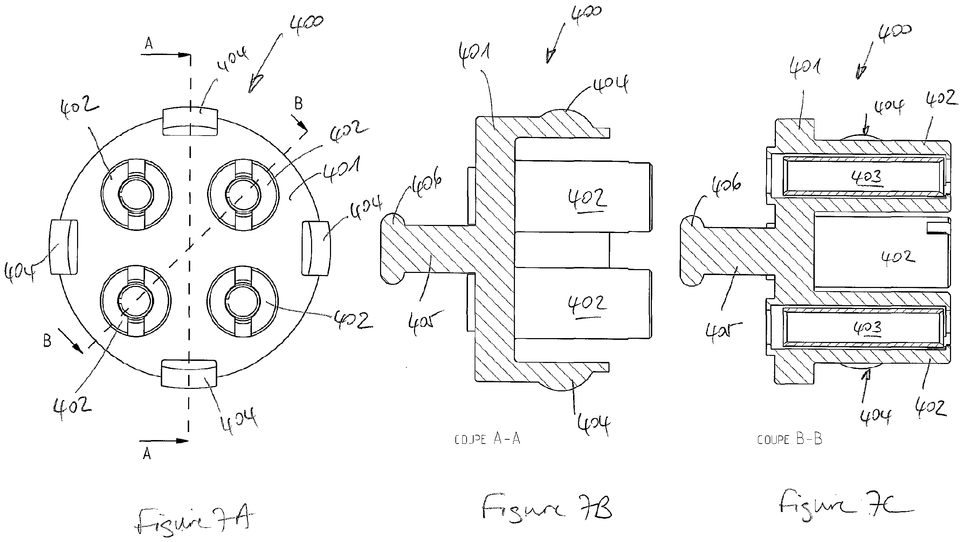

Les figures 6A-6E et 7A-7D illustrent des modes d'exécution uilitsant un système de clipsage pour le montage du support dans le connecteur.

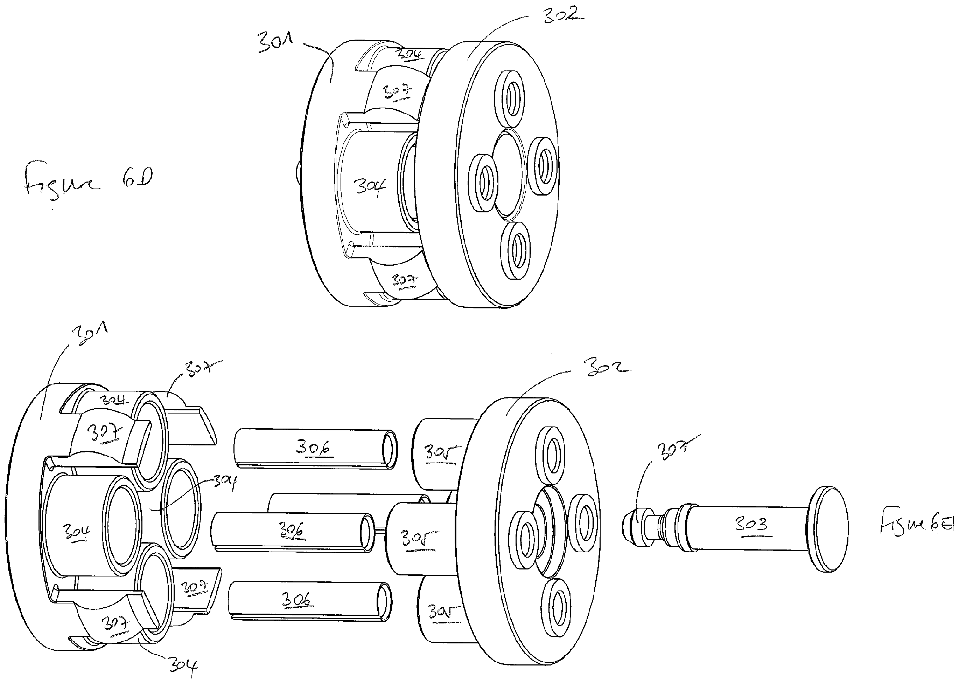

Plus précisément, la figure 6A est une vue arrière du support 300, la figure 6B une vue en coupe selon l'axe A-A, la figure 6C une vue en coupe selon l'axe B-B, la figure 6D une vue en perspective du support 300 à l'état monté et la figure 6E une vue en perspective "éclatée" du support 300.

Le support 300 comprend une première partie 301 et une deuxième partie 302 un clou 303. Les deux parties 301-302 s'emboîtent l'une dans l'autre par des demi cages 304, 305 pour former des cages dans lesquelles se situent les douilles 306. Il est à noter que le système en deux parties illustré ici peut s'appliquer de façon correspondante aux modes d'exécution des figures 4A-4F, 5A-5F.

De plus la première partie comporte une pluralité de bossages 307 (par exemple quatre répartis sur la circonférence du support) qui permettent de clipser le support 300 dans le connecteur (dans des logements correspondants du connecteur) pour son montage et son blocage axial selon les principes de la présente invention. Le clou 303 dans ce mode sert à faciliter l'extraction du support monté, par exemple en tirant sur son extrémité proximale 308 au moyen d'un outil approprié (comme dans le premier mode d'exécution "push-pull" décrit ci-dessus). On peut y ajouter ou non un effet "push-pull" avec des plans inclinés à côté du bossage 307 et sur l'intérieur de la pièce 302 si désiré.

Le nombre de bossage n'est bien entendu pas limité à quatre et leur position peut être autre que celle illustrée à titre d'exemple.

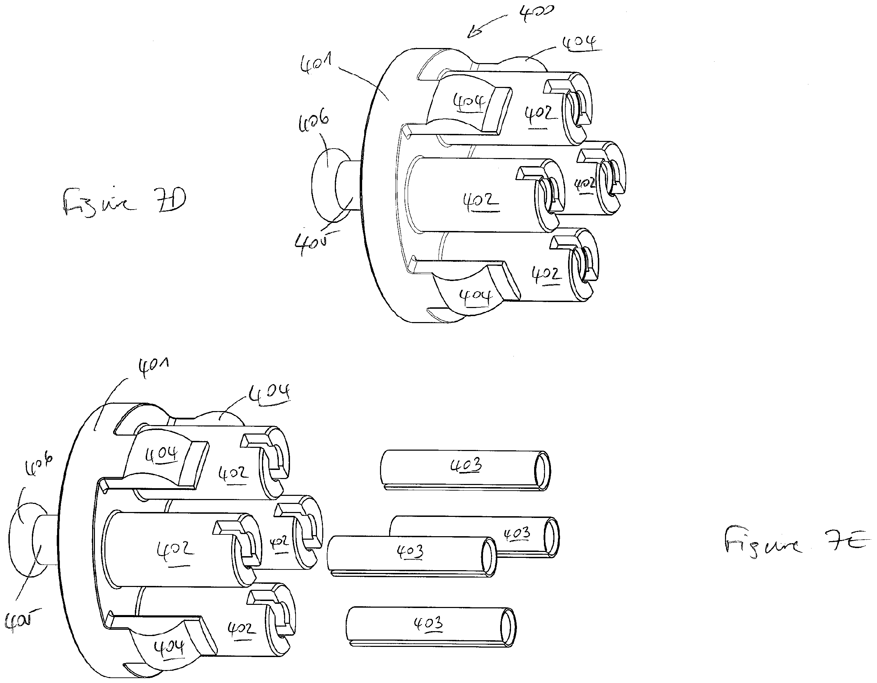

Les figures 7A-7E illustrent un mode d'exécution dérivé de celui des figures 6A-6E. Plus précisément, la figure 7A est une vue arrière du support 400, la figure 7B une vue en coupe selon l'axe A-A, la figure 7C une vue en coupe selon l'axe B-B, la figure 7D une vue en perspective du support 400 à l'état monté et la figure 7E une vue en perspective "éclatée" du support 400.

Ce support 400 ne comprend qu'une seule pièce 401 (au lieu de deux pièces 301-302 du mode d'exécution précédent) et le clou 405 correspond au clou 303 mais est intégré à la pièce 401 avec une fonction équivalente au clou 303 pour l'extraction du support (voir ci-dessus).

Le support 401 comprend des cages 402 (par exemple quatre) dans lesquelles sont situées les douilles 403 selon les principes exposés ci-dessus en relation avec les autres modes d'exécution. La pièce 401 comprend plusieurs bossages 404 (par exemple quatre) pour son clipsage au connecteur (par exemple dans des logements correspondants) pour assurer le verrouillage du support dans le connecteur. Pour l'extraction du support 401, on peut tirer sur l'extrémité proximale 406 du clou 405 comme exposé ci-dessus, par exemple en utilisant un outil approprié.

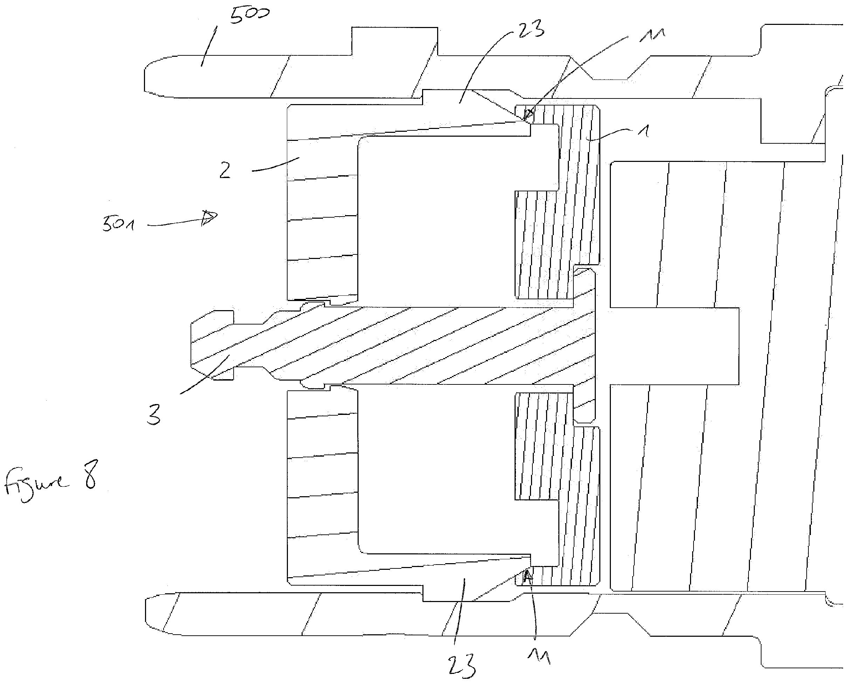

A titre illustratif, la figure 8 montre un connecteur 500 dans lequel est monté un support porte-douille 501 selon l'invention. Le porte-douille 501 correspond par exemple à celui du premier mode d'exécution décrit (push-pull) avec les pièces 1, 2 et le clou 3 pour l'extraction (voir la figure 2 par exemple).

Bien entendu, tous les différents modes d'exécution de supports porte-douille décrits dans la présente demande peuvent se monter dans le connecteur 500, avec les adaptations appropriés et les modifications du connecteur adaptées aux moyens de verrouillage (push-pull, baïonnette, clips et bossages).

Les modes d'exécution décrits le sont à titre d'exemples illustratifs et ne doivent pas être considérés comme limitatifs. Des variations sont tout à fait possibles tout en restant dans le cadre de la présente invention et de la protection revendiquée. Le nombre de douilles peut être varié par rapport aux exemples donnés (plus de quatre ou moins), de même que les bossages etc.

Comme indiqué ci-dessus, les différentes pièces formant le support peuvent être fabriquées en toute matière appropriée, par exemple en matière synthétique.

De plus les différents modes d'exécution et variantes illustrées peuvent être combinés entre eux en fonction des circonstances et des choix effectués.

## Revendications

1. Système de support de douilles d'alignement dans un connecteur, comme un connecteur optique, comprenant un assemblage permettant, d'une part, de fixer plusieurs douilles d'alignement (103,203,306) de façon prédéterminée, et d'autre part, d'extraire du connecteur ou d'insérer dans le connecteur de façon simultanée toutes les douilles d'alignement (103,203,306) sans démontage de l'assemblage ; système dans lequel l'assemblage comprend un porte-douille mâle (1), un porte-douille femelle (2), un clou de verrouillage (3) et un système de verrouillage de type push-pull (21,22,41) ; ledit clou de verrouillage (3) étant rendu solidaire du porte-douille mâle (1) et coulissant à travers le porte-douille femelle (2), de manière à autoriser un déplacement axial du porte-douille mâle (1) contre le porte-douille femelle (2) sous l'action d'une force de traction exercée sur le clou de verrouillage (3), ledit système de verrouillage (21,22,41) étant adapté pour verrouiller l'assemblage au connecteur en fonction "push" et le déverrouiller en fonction "pull" .

2. Système selon la revendication 1, dans lequel système de verrouillage de type push-pull (21,22,41) comprend une lamelle (21) flexible avec un épaulement (22) destiné à s'appuyer contre un épaulement (41) correspondant lié à partie dans laquelle le système est inséré pour bloquer le système en position insérée, et des moyens permettant de déplacer ladite ou lesdites lamelle(s) (21) pour désaccoupler lesdits épaulements (22, 41) et permettre l'extraction du système.

3. Système selon la revendication 2, dans lequel les moyens permettant de déplacer ladite ou lesdites lamelle(s) comprennent des plans inclinés.

4. Système selon la revendication 3, dans lequel au moins un plan incliné se trouve sur ladite ou lesdites lamelle(s) (21) et un plan incliné se trouve sur le porte-douille mâle (1), ladite ou lesdites lamelle(s) étant déplacée(s) en position de désaccouplement par mouvement relatif entre la partie mâle et la partie femelle.

5. Système selon l'une des revendications précédentes, dans lequel au moins les porte-douille mâle (1) et femelle (2) sont en matière synthétique.

## Patentansprüche

1. Stützsystem für Ausrichtungsbuchsen in einem Steckverbinder, zum Beispiel einem optischen Steckverbinder, umfassend eine Baugruppe, die einerseits die Fixierung mehrerer Ausrichtungsbuchsen (103, 203, 306) auf vorbestimmte Art und Weise und andererseits gleichzeitiges Herausziehen aus dem Steckverbinder oder Einführen in den Steckverbinder aller Ausrichtungsbuchsen (103, 203, 306) ohne Auseinanderbauen der Baugruppe gestattet; System, bei dem die Baugruppe einen Steckbuchsenhalter (1), einen Aufnahmebuchsenhalter (2), einen Verriegelungsstift (3) und ein Zug/Druck-Verriegelungssystem (21, 22, 41) umfasst; wobei der Verriegelungsstift (3) an dem Steckbuchsenhalter (1) festgemacht ist und dahingehend durch den Aufnahmebuchsenhalter (2) gleitet, eine axiale Verlagerung des Steckbuchsenhalters (1) bezüglich des Aufnahmebuchsenhalters (2) unter der Wirkung einer Herausziehkraft, die auf den Verriegelungsstift (3) ausgeübt wird, zu gestatten, wobei das Verriegelungssystem (21, 22, 41) dazu ausgeführt ist, die Baugruppe als Funktion von "Drücken" mit dem Steckverbinder zu verriegeln und sie als Funktion von "Ziehen" zu entriegeln.

2. System nach Anspruch 1, wobei das Zug/Druck-Verriegelungssystem (21, 22, 41) eine flexible Lamelle (21) mit einer Schulter (22) zur dahingehenden Anlage an einer entsprechenden Schulter (41), die mit einem Teil, in den das System eingeführt ist, verbunden ist, das System in der eingeführten Position zu verriegeln, und Mittel, die die Verlagerung der Lamelle oder der Lamellen (21) zur Entkopplung der Schultern (22, 41) und zum Gestatten des Herausziehens des Systems gestatten, umfasst.

3. System nach Anspruch 2, wobei die Mittel, die die Verlagerung der Lamelle oder der Lamellen gestatten, geneigte Ebenen umfassen.

4. System nach Anspruch 3, wobei sich mindestens eine geneigte Ebene auf der Lamelle oder den Lamellen (21) befindet und sich eine geneigte Ebene auf dem Steckbuchsenhalter (1) befindet, wobei die Lamelle oder die Lamellen durch eine Relativbewegung zwischen dem Steckteil und dem Buchsenteil in die Entkopplungsposition verlagert wird bzw. werden.

5. System nach einem der vorhergehenden Ansprüche, wobei mindestens der Steckbuchsenhalter (1) und der Aufnahmebuchsenhalter (2) aus synthetischem Material sind.

## Claims

1. Supporting system for alignment sockets in a connector, such as an optical connector, comprising an assembly allowing, on one hand, more than one alignment socket (103, 203, 306) to be secured in a predetermined manner and, on the other hand, all of the alignment sockets (103, 203, 306) to be extracted from the connector or inserted into the connector simultaneously without dismantling the assembly; system wherein the assembly comprises a male socket holder (1), a female socket holder (2) a locking pin (3) and a locking system of the push-pull type (21, 22, 41); said locking pin (3) being secured to the male socket holder (1) and sliding through the female socket holder (2) so as to permit axial movement of the male socket holder (1) with respect to the female socket holder (2) under the action of a tensile force exerted on the locking pin (3), said locking system (21, 22, 41) being designed to lock the assembly to the connector in the "push" function and to unlock it in the "pull" function.

2. System according to Claim 1, wherein the locking system of the push-pull type (21, 22, 41) comprises one flexible strip (21) with a shoulder (22) intended to bear against a corresponding shoulder (41) connected to a part into which the system is inserted in order to lock the system in the inserted position, and means for displacing said strip or strips (21) in order to decouple said shoulders (22, 41) and allow the system to be extracted.

3. System according to Claim 2, wherein the means for displacing said strip or strips comprise inclined planes.

4. System according to Claim 3, wherein at least one inclined plane is located on said strip or strips (21), and an inclined plane is located on the male socket holder (1), said strip or strips being displaced into the detached position by a relative movement between the male part and the female part.

5. System according to one of the preceding claims, wherein at least the male (1) and female (2) socket holders are made of synthetic material.
